# FASCICULE DE BREVET EUROPEEN

(11) **EP 1 548 342 B1**
(45) Date de publication et mention de la délivrance du brevet: **20.09.2006**
(21) Numéro de dépôt: 03447305.8
(22) Date de dépôt: 23.12.2003
(51) Int. Cl.: F16K 31/00

(54) **Vanne pour des applications spatiales à actionneur réalisé en alliage à mémoire de forme**
Ventil für Raumfahrtanwendungen mit SMA-AKTOR
Valve for space applications with SMA actuator

(43) Date de publication de la demande: 29.06.2005
(73) Titulaire: Techspace Aero S.A., 4041 Herstal (Milmort) (BE)
(72) Inventeur: Mignon, Anthony, 4600 Vise (BE); Stalmans, Rudy, 3200 Aarschot (BE)
(74) Mandataire: Van Malderen, Michel

(56) Documents cités:
- EP-A- 1 302 711
- US-A- 3 835 659
- US-A1- 2002 130 284

## Description

### Objet de l'invention

La présente invention se rapporte à une vanne à actionneur réalisé en alliage à mémoire de forme (AMF) et présentant un système permettant de contrôler la température d'activation de la vanne.

La vanne décrite par le présent document est destinée à une utilisation dans les systèmes de propulsion de véhicules spatiaux, plus précisément dans les systèmes de pressurisation où elle permet d'ouvrir ou de fermer une canalisation à partir d'une commande électrique déterminée.

### Etat de la technique

On connaît les propriétés remarquables des alliages à mémoire de forme (AMF) dues à une transformation de phases thermoélastiques au cours de laquelle, à une phase initiale austénitique succède, de façon réversible, une phase martensitique. Cette transition s'effectue sous l'effet d'une variation de température et/ou sous application d'une contrainte mécanique. Parmi les nombreuses propriétés relevées, notons l'effet mémoire simple sens où le matériau martensitique retrouve sa forme initiale lorsqu'il est réchauffé au-dessus de son domaine de transformation. Selon les traitements thermomécaniques subis, l'effet mémoire peut également être à double sens.

Les AMF connus et utilisés actuellement dans la fabrication de vannes (voir par exemple US 2002/0130284) ou autres mécanismes ont une température de transition (de la phase martensitique à la phase austénitique) se situant au mieux à 85°C (*Nitinol® ,* alliage titane-nickel). Cela signifie que, dès que cette température de 85°C est dépassée, la vanne ou le mécanisme s'actionne spontanément, sans autre stimulation extérieure.

Les environnements thermiques caractéristiques des vannes pour la pressurisation de systèmes de propulsion de véhicules spatiaux peuvent s'étendre de -90°C à +100°C. Le recours à un alliage à mémoire de forme standard est donc exclu en raison du risque d'activation spontanée de la vanne dont les conséquences seraient catastrophiques pour la mission (par exemple perte totale du véhicule, abandon de la mission).

Il est par conséquent nécessaire de trouver une solution permettant d'augmenter la valeur de la température de transition de l'AMF au-delà de +100°C, et même d'obtenir une certaine marge de sécurité par rapport à cette valeur de température.

### Buts de l'invention

La présente invention vise à fournir une solution qui s'affranchisse des inconvénients liés à l'état de la technique relatif à l'utilisation, dans des vannes, d'actionneurs réalisés en alliage à mémoire de forme.

En particulier, un but de l'invention est de permettre l'utilisation d'un tel actionneur dans un environnement thermique caractéristique des systèmes de propulsion des véhicules spatiaux, par exemple s'étendant au-delà de +100°C, sans risque d'activation spontanée de la vanne.

Ainsi, un but complémentaire de l'invention est de fournir une solution permettant d'augmenter la valeur de la température de transition de l'alliage à mémoire de forme au-delà de +100°C.

### Principaux éléments caractéristiques de l'invention

La présente invention se rapporte à une vanne présentant un actionneur essentiellement réalisé en alliage à mémoire de forme (AMF) et muni de moyens pour contrôler la température d'activation dudit actionneur, caractérisée en ce que lesdits moyens comprennent un mécanisme de biais inverse (*reverse biasing*).

Selon une première forme d'exécution préférée de l'invention, le mécanisme de biais inverse est du type "pin" à casser.

Selon une deuxième forme d'exécution préférée de l'invention, le mécanisme de biais inverse est du type ressort-verrou (spring latch).

De préférence, l'AMF est un alliage titane-nickel.

La vanne selon l'invention est de type normalement ouverte ou normalement fermée.

Avantageusement, la température d'activation de la vanne est supérieure à 100°C, de préférence supérieure à 110°C.

De manière particulièrement avantageuse, le mécanisme de biais est configuré pour que la force nécessaire pour vaincre l'élément de biais (F_{bias}) est en relation avec la force nécessaire pour ouvrir ou obturer la section d'écoulement du fluide (F_{open/close}).

De préférence, le mécanisme de biais est configuré pour que la différence entre les deux forces soit maximale.

Toujours selon l'invention, la vanne présente des moyens de chauffage électriques pour provoquer l'activation de l'actionneur à AMF.

L'invention concerne également l'utilisation de la vanne décrite et revendiquée dans les systèmes de propulsion des véhicules spatiaux, de préférence dans les circuits de pressurisation désdits systèmes.

### Brève description des figures

La figure 1 illustre schématiquement le principe du "reverse biasing".

La figure 2 représente la caractéristique d'un mécanisme de biais de type "pin" à casser ou de type ressort-verrou.

Les figures 3.a et 3.b représentent schématiquement le mécanisme d'ouverture selon l'invention dans le cas d'une vanne normalement fermée avec biais inverse de type "pin" à casser.

### Description détaillée de l'invention

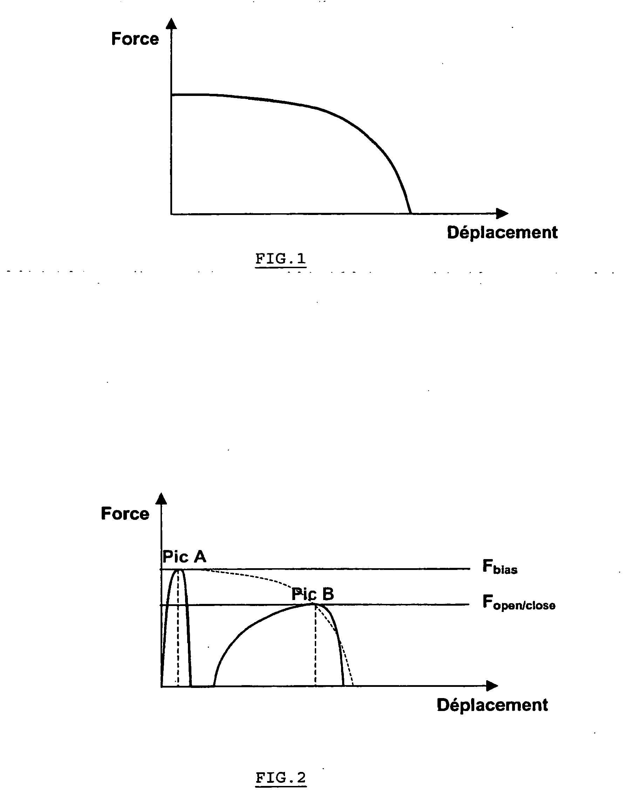

L'invention consiste à recourir au principe du "reverse biasing" afin d'augmenter la température d'activation de la vanne au delà de +100°C. Le "reverse biasing", dont le principe est illustré sur la figure 1, est caractérisé par l'exercice d'une force initiale élevée sur l'élément d'alliage à mémoire de forme (AMF), afin de maximiser l'augmentation de la température de transition de celui-ci. Cette force décroît ensuite au cours du changement de forme de l'AMF.

Afin de minimiser la consommation énergétique de l'actionneur, il est essentiel de minimiser la surface se situant sous la courbe de la figure 1 présentée ci-dessus. La solution proposée est d'employer un mécanisme de biais de type "pin" à casser ou un système ressort-verrou (*spring latch*), tous deux caractérisés comme décrit sur la figure 2.

Le pic A (force F_{bias}) représente l'énergie devant être fournie par l'actionneur pour vaincre l'élément de biais, tandis que le pic B (force F_{open/close}) représente l'énergie requise pour ouvrir ou obturer, selon que l'on a affaire à une vanne normalement fermée (NF) ou normalement ouverte (NO), respectivement, la section d'écoulement du fluide.

En contrôlant le niveau relatif des pics A et B, le domaine de température d'activation peut être parfaitement maîtrisé. De plus, le contrôle des pics A et B permet de réguler la vitesse d'ouverture ou de fermeture de la vanne. En effet, plus l'écart entre F_{bias} et F_{open/close} est élevé, plus l'actionnement de la vanne sera brusque.

### Description d'une forme d'exécution préférée de l'invention

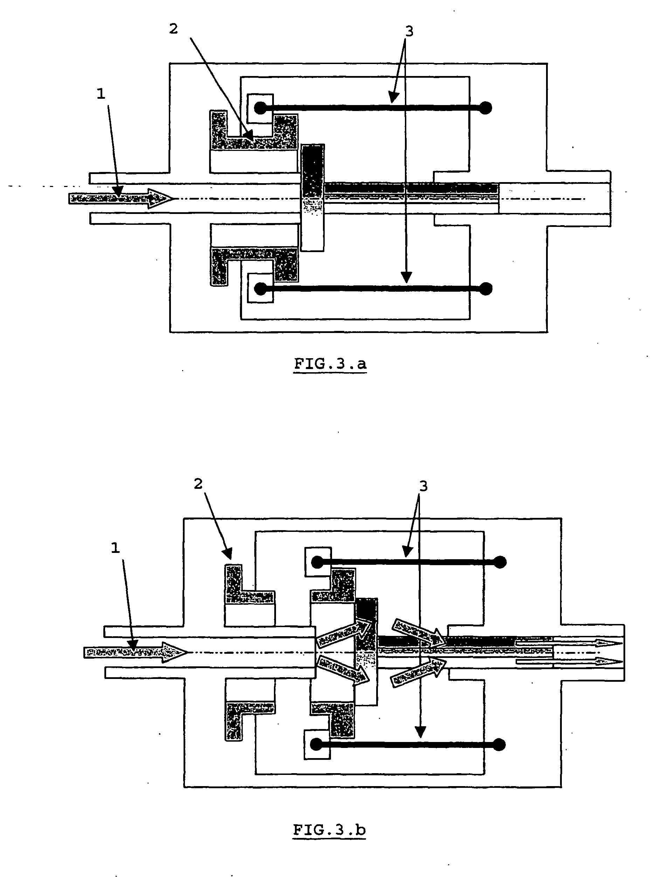

Selon une forme d'exécution préférée de l'invention, la mise en oeuvre du "reverse biasing" dans une vanne pour application spatiale peut être illustrée comme schématisé sur les figures 3.a et 3.b.

Les figures 3.a et 3.b correspondent à une vanne normalement fermée avec "pin" à casser (repère 2 sur les figures), mais le principe est similaire pour une vanne normalement ouverte et/ou pour une vanne avec biais de type "spring/latch".

L'activation de l'élément AMF est réalisée par chauffage par exemple par effet Joule direct, c'est-à-dire en faisant passer un courant électrique dans l'AMF, qui se présente sous forme de fils 3. Ce courant doit être suffisant pour porter l'AMF à une température supérieure ou égale à la température d'activation choisie en dimensionnant l'AMF et son biais (> 100°C). Dans l'exemple illustré ici, l'AMF est choisi pour qu'il se contracte lors de la transition de température.

Le principal avantage de la présente invention réside dans la possibilité d'utiliser un actionneur AMF au-delà de sa température conventionnelle d'utilisation sans risque d'activation spontanée.

## Revendications

1. Vanne présentant un actionneur (3) essentiellement réalisé en alliage à mémoire de forme (AMF) et muni de moyens pour contrôler la température d'activation dudit actionneur, **caractérisée en ce que** lesdits moyens comprennent un mécanisme (2) de biais inverse , c'est à dire un mécanisme exerçant une force initiale élevée sur l'élément d'alliage à mémoire de forme et qui décroît ensuite au cours du changement de forme de l'élément d'alliage à mémoire de forme.

2. Vanne selon la revendication 1, **caractérisée en ce que** le mécanisme (2) de biais inverse est du type "pin" à casser.

3. Vanne selon la revendication 1, **caractérisée en ce que** le mécanisme (2) de biais inverse est du type ressort-verrou.

4. Vanne selon l'une quelconque des revendications précédentes, **caractérisée en ce que** l'AMF est un alliage titane-nickel.

5. Vanne selon l'une quelconque des revendications précédentes, **caractérisée en ce qu**'elle est de type normalement ouverte ou normalement fermée (1).

6. Vanne selon l'une quelconque des revendications précédentes, **caractérisée en ce que** la température d'activation de la vanne est supérieure à 100°C, de préférence supérieure à 110°C.

7. Vanne selon l'une quelconque des revendications précédentes, **caractérisée en ce que** le mécanisme de biais (2) est configuré pour que la force nécessaire pour vaincre l'élément de biais (F_{bias}) est en relation avec la force nécessaire pour ouvrir ou obturer la section d'écoulement du fluide (F_{open/close}).

8. Vanne selon la revendication 7, **caractérisée en ce que** le mécanisme de biais (2) est configuré pour que la différence entre les deux forces soit maximale.

9. Vanne selon l'une quelconque des revendications précédentes, **caractérisée en ce qu**'elle présente des moyens de chauffage électriques pour provoquer l'activation de l'actionneur à AMF.

10. Utilisation d'une vanne selon l'une quelconque des revendications précédentes, dans les systèmes de propulsion des véhicules spatiaux, de préférence dans les circuits de pressurisation desdits systèmes.

## Claims

1. Valve with an actuator (3) essentially made of a shape-memory alloy (SMA) and provided with means for controlling the activation temperature of said actuator, **characterised in that** said means, i.e. a mechanism exerting high initial force on the shape-memory alloy element and which then decreases during the change of shape of the shape-memory alloy element, comprises a reverse biasing mechanism (2).

2. Valve according to Claim 1, **characterised in that** the reverse biasing mechanism (2) is of the breakable "pin" type.

3. Valve according to Claim 1, **characterised in that** the reverse biasing mechanism (2) is of the spring latch type.

4. Valve according to any one of the preceding claims, **characterised in that** the SMA is a titanium-nickel alloy.

5. Valve according to any one of the preceding claims, **characterised in that** it is of the normally open or normally closed type (1).

6. Valve according to any one of the preceding claims, **characterised in that** the activation temperature of the valve is higher than 100°C, preferably higher than 110°C.

7. Valve according to any one of the preceding claims, **characterised in that** the biasing mechanism (2) is designed in such a way that the force required to overcome the biasing element (F_{bias}) is related to the force required to open or close the flow section of the fluid (F_{open/close})

8. Valve according to Claim 7, **characterised in that** the biasing mechanism (2) is designed so that the difference between the two forces is maximised.

9. Valve according to any one of the preceding claims, **characterised in that** it has electrical heating means for inducing the activation of the SMA actuator.

10. Use of a valve according to any one of the preceding claims, in the propulsion systems of spaceships, preferably in the pressurisation circuits of said systems.

## Patentansprüche

1. Ventil mit einem Stellglied (3), das im Wesentlichen aus einer Formgedächtnis-Legierung (FGL) hergestellt ist und mit Mitteln ausgestattet ist, um die Betätigungstemperatur dieses Stellglieds zu steuern, **dadurch gekennzeichnet, dass** die besagten Mittel einen Mechanismus für die Rückstellung in Sperrrichtung umfassen, d.h. einen Mechanismus, der eine hohe anfängliche Kraft auf ein Element aus Formgedächtnis-Legierung ausübt, die dann im Lauf der Formänderung des Elements aus Formgedächtnis-Legierung abnimmt.

2. Ventil nach Anspruch 1, **dadurch gekennzeichnet, dass** der Mechanismus (2) zur Rückstellung in Sperrrichtung vom Typ Sollbruchstift ist.

3. Ventil nach Anspruch 1, **dadurch gekennzeichnet, dass** der Mechanismus (2) zur Rückstellung in Sperrrichtung vom Typ Federriegel ist.

4. Ventil nach einem der vorstehenden Ansprüche, **dadurch gekennzeichnet, dass** die FGL eine Nickel-Titan-Legierung ist.

5. Ventil nach einem der vorstehenden Ansprüche, **dadurch gekennzeichnet, dass** es vom Typ "normal offen" oder "normal geschlossen" (1) ist.

6. Ventil nach einem der vorstehenden Ansprüche, **dadurch gekennzeichnet, dass** die Ventilbetätigungstemperatur mehr als 100°C, vorzugsweise mehr als 110°C beträgt.

7. Ventil nach einem der vorstehenden Ansprüche, **dadurch gekennzeichnet, dass** der Bias-Mechanismus (2) so konfiguriert ist, dass die erforderliche Kraft für die Überwindung des Bias-Elements (F_{bias}) in Beziehung zu der Kraft steht, die zum Öffnen oder Verschließen des Mediumleitungsquerschnitts (F_{open/close}) erforderlich ist.

8. Ventil nach Anspruch 7, **dadurch gekennzeichnet, dass** der Bias-Mechanismus so konfiguriert ist, dass zwischen beiden Kräften eine maximale Differenz besteht.

9. Ventil nach einem der vorstehenden Ansprüche, **dadurch gekennzeichnet, dass** es elektrische Heizmittel zum Auslösen der Betätigung des FGL-Stellglieds aufweist.

10. Verwendung eines Ventils nach einem der vorstehenden Ansprüche in Antriebssystemen von Raumfahrzeugen, vorzugsweise in Druckbeaufschlagungskreisen dieser Systeme.
